# EUROPÄISCHE PATENTSCHRIFT

(11) **EP 2 837 142 B1**
(45) Veröffentlichungstag und Bekanntmachung des Hinweises auf die Patenterteilung: **30.08.2017**
(21) Anmeldenummer: 13717234.2
(22) Anmeldetag: 09.04.2013
(51) Int. Cl.: H04L 12/40, H04L 7/00

(54) **VERFAHREN ZUM ÜBERTRAGEN VON PROZESSDATEN IN EINER AUTOMATISIERT GESTEUERTEN ANLAGE**
METHOD FOR TRANSMITTING PROCESS DATA IN AN INSTALLATION CONTROLLED IN AN AUTOMATED MANNER
PROCÉDÉ DE TRANSMISSION DE DONNÉES DE PROCESSUS DE DONNÉES DANS UNE INSTALLATION À COMMANDE AUTOMATIQUE

(30) Priorität: 13.04.2012 DE 102012103194
(43) Veröffentlichungstag der Anmeldung: 18.02.2015
(73) Patentinhaber: Pilz GmbH & Co. KG, 73760 Ostfildern (DE)
(72) Erfinder: GRUBER, Winfried, 73760 Ostfildern (DE)
(74) Vertreter: Witte, Weller & Partner Patentanwälte mbB
(86) Internationale Anmeldenummer: PCT/EP2013/057378
(87) Internationale Veröffentlichungsnummer: WO 2013/153057

(56) Entgegenhaltungen:
- EP-A2- 0 814 586
- EP-A2- 1 009 125
- WO-A1-2009/030278
- US-A1- 2010 219 992
- US-A1- 2011 169 540

## Beschreibung

Die vorliegende Erfindung betrifft ein Verfahren zum Übertragen von Prozessdaten in einer automatisiert gesteuerten Anlage sowie einen entsprechenden Prozessdatenempfänger, der zum Empfangen von Prozessdaten gemäß dem Verfahren ausgebildet ist.

WO 2004/097539 A1 beschreibt ein Verfahren und eine Vorrichtung zum Steuern eines sicherheitskritischen Prozesses, bei dem eine fehlerfreie Funktion erforderlich ist, um eine Gefahr für Personen zu vermeiden. Insbesondere geht es um die Überwachung und Steuerung von automatisiert arbeitenden Anlagen, von deren Betrieb eine Verletzungsgefahr für Personen ausgeht. Üblicherweise wird eine solche Anlage mit Schutzzäunen, Schutztüren, Lichtschranken, Lichtgittern, Not-Aus-Tastern und anderen Sicherheitssensoren abgesichert. Sobald eine Schutztür geöffnet wird, eine Lichtschranke durchbrochen oder ein Not-Aus-Taster betätigt wird, muss die Anlage angehalten werden oder auf andere Weise in einen ungefährlichen Zustand gebracht werden. Dies erreicht man üblicherweise, indem eine fehlersicher ausgebildete Steuerung Zustandssignale der Schutztüren, Lichtgitter, Not-Aus-Taster etc. in definierten wiederkehrenden Zeitintervallen auswertet und in Abhängigkeit davon sicherheitsrelevante Aktoren betätigt, wie beispielsweise Schütze, die im Stromversorgungspfad zu den elektrischen Antrieben der Anlage angeordnet sind.

Häufig sind die Sensoren und Aktoren räumlich entfernt von der Steuerung. Bei einer größeren Anlage mit vielen Sensoren und Aktoren bietet es sich an, die Steuerung über ein sog. Bussystem mit den Sensoren und Aktoren zu verbinden. Das Bussystem ermöglicht den Austausch von digitalen Daten, die die Zustände der Sensoren und Aktoren sowie Steuerbefehle der Steuerung repräsentieren. Im Folgenden werden diese Daten allgemein als Prozessdaten bezeichnet. Darüber hinaus können Prozessdaten Diagnoseinformationen und/oder Konfigurationsinformationen beinhalten, die für den Betrieb der Anlage von Bedeutung sind.

Die genannte WO 2004/097539 A1 beschreibt ein Verfahren und eine entsprechende Vorrichtung, wobei eine Vielzahl von sog. E/A-Einheiten Prozessdaten über ein Bussystem an eine Steuereinheit überträgt. Die Steuereinheit erzeugt ein variables Schlüsselwort, mit dem die E/A-Einheiten die zu übertragenden Prozessdaten codieren. Aufgrund der sich verändernden Codierung ändern sich die übertragenen Daten, selbst wenn die Prozessdaten als solche über einen langen Zeitraum gleich bleiben, etwa weil sich der Zustand einer Schutztür nicht verändert. Mit Hilfe des variablen Schlüsselwortes wird eine determinierte Dynamik erzeugt, die es der Steuerung möglich macht, die E/A-Einheiten auf fehlerfreien Betrieb zu überprüfen. Das Verfahren und die entsprechende Vorrichtung haben sich im praktischen Betrieb bewährt. Gleichwohl besteht der Wunsch, die Übertragung von Prozessdaten in einer automatisiert gesteuerten Anlage weiter zu optimieren. Es besteht insbesondere der Wunsch, die Datenübertragungsgeschwindigkeiten zu erhöhen, um möglichst viele Prozessdaten in möglichst kurzen Zeitintervallen über ein sehr einfach und kostengünstig zu realisierendes Bussystem zu übertragen.

WO 2006/069691 A1 beschreibt ein weiteres Steuerungssystem mit räumlich verteilten Stationen, zwischen denen Prozessdaten in wiederkehrenden Zeitintervallen übertragen werden. Eine erste Station erzeugt einen Datenrahmen mit einer Vielzahl von Datenfeldern. Der Datenrahmen wird nach Art einer Eimerkette durch eine Reihe von weiteren Stationen übertragen. Jede weitere Station schreibt Prozessdaten in den Datenrahmen, und sie liest Prozessdaten von anderen Stationen, wenn der von allen Stationen befüllte Datenrahmen wieder durch die Reihe der Stationen zur ersten Station zurückgesendet wird. Dieses Verfahren macht es möglich, eine Querkommunikation zwischen beliebigen Stationen eines Steuerungssystems innerhalb eines einzigen Kommunikationszyklus zu realisieren.

Die beiden genannten Dokumente beschreiben Verfahren zum Übertragen von Prozessdaten in automatisiert gesteuerten Anlagen auf einer höheren Protokollebene des sog. OSI-Referenzmodells. Genauer gesagt geht es um Regeln, 'nach denen die Kommunikation abläuft. Mit welchen elektrischen oder auch optischen Signalen die Prozessdaten übertragen werden, ist für die vorgeschlagenen Verfahren von untergeordneter Bedeutung. Insbesondere spielt es für die vorgeschlagenen Verfahren keine Rolle, ob die Prozessdaten mit Hilfe von separaten Daten- und Taktleitungen übertragen werden oder ob Prozessdaten und Übertragungstakt in einem Signal kombiniert sind. Das Taktsignal bestimmt die Übertragungsgeschwindigkeit und eine Kombination in einem Signal ist wünschenswert, um die Anzahl an Übertragungsleitungen zu minimieren.

Es gibt im Stand der Technik bereits Verfahren, die es möglich machen, Taktsignal und Daten in einem gemeinsamen Signal zu kombinieren. Typischerweise benötigen diese Verfahren auf Seiten des Datenempfängers eine sog. PLL. Die PLL (Phase Locked Loop) ist ein Regelkreis, der ein Taktsignal erzeugt, welches sich mit einem extern zugeführten Signal synchronisiert. Mit Hilfe einer PLL kann man daher aus einem Datenstrom ein Taktsignal erzeugen, das dann eine eindeutige Rekonstruktion der einzelnen Datensymbole des Datenstroms ermöglicht. Leider ist eine PLL recht aufwendig und teuer, wenn man eine große Anzahl von relativ einfachen und kostengünstigen Prozessdatenempfängern realisieren möchte.

Alternativ gibt es die Möglichkeit, Datensymbole aus einem seriellen Datenstrom mit Hilfe einer sog. Überabtastung zu rekonstruieren. In diesem Fall muss der Datenempfänger den empfangenen Datenstrom mit einer Taktfrequenz verarbeiten, die wesentlich höher ist als die Symbolrate des Datenstroms selbst. Dies ist problematisch, wenn die Symbolrate des Datenstroms und dementsprechend die Datenübertragungsgeschwindigkeit hoch sein soll, da dann sehr schnelle und dementsprechend teure Schaltkreise auf der Empfängerseite benötigt werden. Typischerweise wird die Überabtastung daher nur bei relativ langsamen Datenübertragungen verwendet, wie etwa bei der bekannten RS-232-Datenübertragung aus den 1960er Jahren. Eine Überabtastung bei einer RS-232 Datenübertragung ist beispielsweise in einer Application Note mit der Nummer 2141 von der Firma Maxim Integrated Products mit Sitz in Sunnyvale, CA, USA beschrieben.

US 2010/0219992 A1 offenbart ein Verfahren zur Dekodierung eines Signals, das über mindestens eine Verbindungsleitung eines Datenübertragungssystems übertragen wird, wobei zunächst eine Kann-Flanken-Position (KFP) für eine bevorstehende Flanke abgeschätzt wird. Eine Abtastung zu einem bestimmten Abtastzeitpunkt findet bei dem vorgeschlagenen Verfahren nicht statt.

WO 2009/030278 A1 offenbart ein Verfahren, bei dem ein Sender ein digitales Signal mit einer ersten Signalrate aussendet. Ein Empfänger empfängt das Signal und rekonstruiert die einzelnen Werte des Signals durch Übertasten des Signals. Dabei extrahiert der Empfänger zunächst Zeitinformationen aus dem empfangenen Signal, um auf Basis dieser die einzelnen Werte zu rekonstruieren.

US 2011/0169540 A1 offenbart ein Verfahren zur Takt- und Datenrückgewinnung aus seinem sequenziellen Strom von Daten, der Bursts von Daten umfasst, die durch Lücken getrennt werden. Jeder Burst von Daten kommt mit seiner eigenen Phase und mit seiner eigenen Abweichung von einer nominalen Frequenz an. Die Bursts von Daten beginnen mit einer Präambel, die benutzt wird, um das Timing des Bursts zu bestimmen. Am Anfang jedes Bursts von Daten werden abgetastete Eingangssignale durch einen Flankendetektor analysiert, um eine Abtastphase für den Burst zu bestimmen.

Vor diesem Hintergrund ist es eine Aufgabe der vorliegenden Erfindung, ein Verfahren zum Übertragen von Prozessdaten in einer automatisiert gesteuerten Anlage anzugeben, das eine sehr kostengünstige Realisierung in Verbindung mit einer hohen Datenübertragungsgeschwindigkeit ermöglicht. Aufgrund der angestrebten Verwendung soll das neue Verfahren vor allem eine serielle Übertragung von vielen Prozessdaten in zyklisch wiederkehrenden Zeitintervallen ermöglichen. Es ist ferner eine Aufgabe, einen alternativen, kostengünstigen Prozessdatenempfänger anzugeben, der zum Empfangen von zyklisch wiederkehrenden Prozessdaten in einer automatisiert gesteuerten Anlage geeignet ist.

Gemäß einem ersten Aspekt der Erfindung wird diese Aufgabe durch ein Verfahren zum Übertragen von Prozessdaten in einer automatisiert gesteuerten Anlage gelöst, mit den Schritten:
- Bereitstellen eines Prozessdatensenders, der in definierten wiederkehrenden Zeitintervallen jeweils aktuelle Prozessdaten über eine Datenleitung versendet, und
- Bereitstellen eines Prozessdatenempfängers, der die Prozessdaten über die Datenleitung empfängt,
wobei der Prozessdatensender die Prozessdaten in Form eines seriellen Sendedatenstroms, der eine Vielzahl von Datensymbolen mit einer definierten Symbolrate rate aufweist, über die Datenleitung sendet, wobei der Prozessdatenempfänger den seriellen Sendedatenstrom mit einer Abtastrate abtastet, die um einen definierten Faktor höher ist als die Symbolrate, um auf diese Weise einen seriellen Empfängerdatenstrom mit einer Vielzahl von Abtastwerten pro Datensymbol zu erzeugen, wobei der Prozessdatenempfänger den seriellen Empfängerdatenstrom in Datenpakete unterteilt, die jeweils eine definierte erste Anzahl an Abtastwerten aufweisen, wobei der Prozessdatenempfänger aus den jeweiligen Datenpaketen eine definierte zweite Anzahl an Abtastwerten auswählt, wobei die zweite Anzahl um den definierten Faktor kleiner ist als die erste Anzahl, und wobei der Prozessdatenempfänger die ausgewählten Abtastwerte als empfangene Prozess daten verarbeitet, gekennzeichnet dadurch, dass die aus jedem Datenpaket ausgewählten Abtastwerte äquidistant zueinander sind, und dass jeder ausgewählte Abtastwert (72') einen rechtsseitigen und einen linksseitigen Nachbarn (92, 94) besitzt, und wobei der Prozessdatenempfänger (18) die ausgewählten Abtastwerte (72') mit ihren jeweiligen rechtsseitigen und linksseitigen Nachbarn (92, 94) vergleicht, um eine Vielzahl von Vergleichsergebnissen zu bestimmen.

Gemäß einem weiteren Aspekt wird diese Aufgabe durch einen Prozessdatenempfänger zum Empfangen von Prozessdaten in einer automatisiert gesteuerten Anlage gelöst, in der ein Prozessdatensender aktuelle Prozessdaten in definierten wiederkehrenden Zeitintervallen über eine Datenleitung versendet, wobei der Prozessdatensender die Prozessdaten in Form eines seriellen Sendedatenstroms, der eine Vielzahl von Datensymbolen mit einer definierten Symbolrate aufweist, über die Datenleitung sendet, mit einem Eingang zum Aufnehmen des seriellen Sendedatenstroms, mit einem Kommunikationsbaustein, der die Prozessdaten aus dem seriellen Sendedatenstrom extrahiert, und mit einem Ausgang, wobei der Kommunikationsbaustein den seriellen Sendedatenstrom mit einer Abtastrate abtastet, die um einen definierten Faktor höher ist als die Symbolrate, um auf diese Weise einen seriellen Empfängerdatenstrom mit einer Vielzahl von Abtastwerten pro Datensymbol zu erzeugen, wobei der Kommunikationsbaustein den seriellen Empfängerdatenstrom in Datenpakete unterteilt, die jeweils eine definierte erste Anzahl an Abtastwerten aufweisen, wobei der Kommunikationsbaustein aus den jeweiligen Datenpaketen eine definierte zweite Anzahl an Abtastwerten auswählt, wobei die zweite Anzahl um den definierten Faktor kleiner ist als die erste Anzahl, und wobei der Kommunikationsbaustein die ausgewählten Abtastwerte an dem Ausgang zur Verfügung stellt, gekennzeichnet dadurch, dass die aus jedem Datenpaket ausgewählten Abtastwerte äquidistant zueinander sind, und dass jeder ausgewählte Abtastwert (72') einen rechtsseitigen und einen linksseitigen Nachbarn (92, 94) besitzt, und wobei der Prozessdatenempfänger (18) die ausgewählten Abtastwerte (72') mit ihren jeweiligen rechtsseitigen und linksseitigen Nachbarn (92, 94) vergleicht, um eine Vielzahl von Vergleichsergebnissen zu bestimmen.

Das neue Verfahren und der entsprechende Prozessdatenempfänger arbeiten nach dem Prinzip der Überabtastung, d.h. der Sendedatenstrom wird mit einer Abtastrate abgetastet, die mehrere Abtastwerte zu jedem Datensymbol liefert. Anschließend wählt der im Prozessdatenempfänger integrierte Kommunikationsbaustein einen Abtastwert pro Datensymbol aus der Vielzahl der Abtastwerte pro Datensymbol aus. Der Prozessdatenempfänger rekonstruiert auf diese Weise die Prozessdaten aus dem Sendedatenstrom, ohne dass er ein Taktsignal benötigt, das auf die Symbolrate des Sendedatenstroms und/oder das Taktsignal des Prozessdatensenders synchronisiert ist. Das neue Verfahren und der entsprechende Prozessdatenempfänger kommen daher ohne eine PLL aus, was eine kostengünstige Realisierung ermöglicht.

Mangels eines synchronisierten Taktsignals ist die Auswahl der "richtigen" Abtastwerte für jedes Datensymbol aus der Menge der insgesamt zur Verfügung stehenden Abtastwerte eine Herausforderung. Die Auswahl erfolgt nach dem neuen Verfahren block- bzw. gruppenweise, indem der Prozessdatenempfänger den Empfängerdatenstrom in Datenpakete unterteilt und die geeigneten Abtastwerte dann gruppen- bzw. blockweise aus den Datenpaketen auswählt. Dies macht es möglich, die Auswahl der geeigneten bzw. richtigen Abtastwerte mit zueinander parallelen Datenpfaden zu realisieren. Durch die Parallelisierung können die vielen Abtastwerte pro Datensymbol gleichzeitig ausgewertet werden, ohne dass der Prozessdatenempfänger mit einer Taktfrequenz arbeiten muss, die ein Vielfaches der Symbolrate ist. Daher ermöglicht das neue Verfahren eine besonders kostengünstige Realisierung, die ohne PLL und auch ohne "superschnelle" Baugruppen auskommt.

Ein Kriterium für die Auswahl der richtigen Abtastwerte ist, dass die ausgewählten Abtastwerte für jedes Datenpaket äquidistant zueinander sind. Dies bedeutet, dass der zeitliche Abstand von einem ausgewählten Abtastwert zum nächsten ausgewählten Abtastwert innerhalb des jeweils betrachteten Datenpaketes genau gleich ist. Von einem Datenpaket zum anderen können die zeitlichen Abstände zwischen zwei ausgewählten Abtastwerten jedoch schwanken, was vorteilhaft ist, um Gleichlaufschwankungen im Sendedatenstrom und/oder eine unterschiedliche Taktbasis zwischen Sender und Empfänger auszugleichen.

Ein weiteres Kriterium für die Auswahl betrifft die Anzahl der aus einem Datenpaket ausgewählten Abtastwerte. Diese (zweite) Anzahl ist um denselben Faktor kleiner, um den die (erste) Anzahl der Abtastwerte höher ist als die Anzahl der Datensymbole im Sendedatenstrom. Infolgedessen liefert das neue Verfahren genau einen Abtastwert pro Datensymbol. Durch die blockweise Auswahl in Verbindung mit der Bedingung, dass die ausgewählten Abtastwerte äquidistant zueinander sind, lassen sich die jeweils "richtigen" Abtastwerte kostengünstig und mit einer hohen Treffergenauigkeit bestimmen. Insbesondere ermöglicht die blockweise Auswahl eine Datenverarbeitung, die trotz der Überabtastung mit der geringeren Taktfrequenz des Sendedatenstroms realisiert werden kann. Die oben genannte Aufgabe ist daher vollständig gelöst.

In einer bevorzugten Ausgestaltung der Erfindung wählt der Prozessdatenempfänger die definierte zweite Anzahl an Abtastwerten zeitparallel aus den jeweiligen Datenpaketen aus.

Prinzipiell ist es denkbar, die Auswahl der geeigneten Abtastwerte zwar blockweise anhand der Datenpakete vorzunehmen, die ausgewählten Abtastwerte in jedem Block aber zeitlich nacheinander zu bestimmen, indem beispielsweise ein Logikpfad, der die Auswahl realisiert, für jeden ausgewählten Abtastwert erneut und damit mehrfach durchlaufen wird. Eine zeitparallele Auswahl mit Hilfe von parallelen Datenpfaden ist jedoch bevorzugt, da sie eine schnellere Rekonstruktion der Prozessdaten mit kostengünstigeren Bauteilen ermöglicht. In dieser Ausgestaltung wird die blockweise Verarbeitung der zahlreichen Abtastwerte pro Datensymbol also nicht nur als Kriterium für die Auswahl der geeigneten Abtastwerte verwendet, sondern die Auswahl selbst ist parallelisiert und vorzugsweise auf so genau viele Datenpfade verteilt, wie Abtastwerte pro Datenpaket ausgewählt werden müssen. In einem besonders bevorzugten Ausführungsbeispiel, das weiter unten im Detail erläutert wird, wird der Sendedatenstrom vierfach überabgetastet, so dass für jedes Datensymbol vier Abtastwerte vorliegen. Anschließend werden pro Datenpaket zwanzig Abtastwerte mit fünf zueinander parallelen Datenpfaden verarbeitet, so dass aus den zwanzig Abtastwerten zeitparallel fünf Abtastwerte ausgewählt werden. Jeder ausgewählte Abtastwert repräsentiert ein Datensymbol im Sendedatenstrom. Die Anzahl der zueinander parallelen Datenpfade und somit auch die Anzahl der zeitparallel ausgewählten Abtastwerte ist in solchen Fällen also höher als der Faktor, um den die Abtastrate selbst höher als die Symbolrate ist. Eine solche Parallelisierung macht es besonders einfach, jeden Datenpfad mit einer Taktfrequenz zu betreiben, die der Symbolrate des Sendedatenstroms entspricht oder sogar kleiner ist.

In einer weiteren Ausgestaltung bildet der Prozessdatenempfänger die Datenpakete in zeitlich aufeinanderfolgenden Schritten. Vorzugsweise bildet der Prozessdatenempfänger jeweils ein Datenpaket pro "Blockauswahl", wobei aus jedem Datenpaket jeweils ein Abtastwert für eines von zumindest drei Datensymbolen ausgewählt wird. Des Weiteren ist es bevorzugt, wenn der Prozessdatenempfänger die aus der Überabtastung resultierenden Abtastwerte in ein Schieberegister schreibt, aus dem die definierte erste Anzahl an Abtastwerten parallel ausgelesen wird, um den seriellen Empfängerdatenstrom in die Datenpakete zu unterteilen.

In dieser Ausgestaltung wird nicht der gesamte Sendedatenstrom "am Stück" analysiert, um die übertragenen Prozessdaten auf der Empfängerseite zu rekonstruieren, sondern der Prozessdatenempfänger nutzt die Unterteilung des Empfängerdatenstroms in Datenpakete zu einer sequenziellen Verarbeitung. Pro Datenpaket erfolgt jedoch in den bevorzugten Fällen eine parallele Verarbeitung, um die weiter oben erläuterten Vorteile zu erreichen. Die hiesige Ausgestaltung ermöglicht eine Rekonstruktion der Prozessdaten "on the fly", d.h. die Rekonstruktion der Prozessdaten kann bereits beginnen, bevor der Prozessdatenempfänger den Sendedatenstrom vollständig empfangen hat. Diese Ausgestaltung ist besonders vorteilhaft, wenn der Sendedatenstrom der Reihe nach durch eine Vielzahl von Stationen läuft, wobei jede Station individuell zugeordnete Informationen aus dem Sendedatenstrom ausliest und/oder aktuelle Prozessdaten in den Sendedatenstrom einfügt. Die Ausgestaltung eignet sich daher besonders für Anwendungen, bei denen eine zentrale Steuereinheit Prozessdaten von einer Vielzahl von Sensoren und Aktoren "einsammelt", um in Abhängigkeit davon Steuerbefehle für die Aktoren zu bestimmen.

In einer weiteren Ausgestaltung besitzt jeder ausgewählte Abtastwert einen rechtsseitigen und einen linksseitigen Nachbarn, wobei der Prozessdatenempfänger die ausgewählten Abtastwerte mit ihren jeweiligen rechtsseitigen und linksseitigen Nachbarn vergleicht, um eine Vielzahl von Vergleichsergebnissen zu bestimmen.

Die Vergleichsergebnisse dieser Ausgestaltung repräsentieren die Nachbarschaftsbeziehungen zwischen den ausgewählten Abtastwerten und ihren jeweiligen Nachbarn. Anhand dieser Nachbarschaftsbeziehungen kann man einfach feststellen, ob die ausgewählten Abtastwerte weitgehend mittig zu den Datensymbolen liegen, die sie jeweils repräsentieren, oder ob die ausgewählten Abtastwerte eher am Rand und insbesondere im Bereich einer Signalflanke eines zugehörigen Datensymbols liegen. Letzteres ist ungünstig, weil es die Gefahr birgt, dass der Abtastwert die Information im zugehörigen Datensymbol falsch wiedergibt. Mit anderen Worten ist es bevorzugt, wenn die ausgewählten Abtastwerte jeweils weitgehend mittig zu den entsprechenden Datensymbolen liegen, die sie repräsentieren. Ein Vergleich des ausgewählten Abtastwertes mit seinem rechts- und linksseitigen Nachbarn, d.h. mit nicht-ausgewählten Abtastwerten, die dem ausgewählten Abtastwert zeitlich unmittelbar vorausgehen bzw. zeitlich unmittelbar folgen, ermöglicht eine sehr einfache und schnell zu realisierende Prüfung der ausgewählten Abtastwerte. Für den bevorzugten Fall, in dem die Datensymbole binäre Symbole sind, genügt ein einfacher Identitätsvergleich, um festzustellen, ob ein ausgewählter Abtastwert "gut" gewählt ist. Ist der ausgewählte Abtastwert gleich zu seinen NachbarAbtastwerten, kann der ausgewählte Abtastwert nicht an einer Signalflanke im Sendedatenstrom liegen. Besitzt hingegen einer der Nachbarn einen anderen Pegelwert als der ausgewählte Abtastwert, befindet sich der ausgewählte Abtastwert an einer Signalflanke des Sendedatenstroms. In diesem Fall ist es von Vorteil, zumindest die Auswahl der nächsten Abtastwerte so zu treffen, dass der Abstand zu der Signalflanke vergrößert wird. Darüber hinaus kann der ausgewählte Abtastwert einer Plausibilitätskontrolle unterzogen werden, um Fehler bei der Rekonstruktion der Prozessdaten zu vermeiden.

In einem bevorzugten Ausführungsbeispiel, in dem die Datensymbole binäre Datensymbole sind, wird der ausgewählte Abtastwert mit Hilfe eines XOR-Vergleichs mit seinem rechtsseitigen Nachbarn und mit Hilfe eines weiteren XOR-Vergleichs mit seinem linksseitigen Nachbarn verknüpft. Wenn die XOR-Verknüpfungsergebnis einer logischen 0 entsprichen, sind der ausgewählte Abtastwert und sein entsprechender Nachbarwert gleich. Eine logische 1 signalisiert hingegen, dass der ausgewählte Abtastwert und sein Nachbar verschieden voneinander sind. Eine XOR-Verknüpfung ermöglicht daher auf sehr einfache und schnelle Weise eine Prüfung, ob der ausgewählte Abtastwert "geeignet" ist.

In einer weiteren Ausgestaltung bildet der Prozessdatenempfänger die Datenpakete in Abhängigkeit von den Vergleichsergebnissen. Bevorzugt wird jedes neue Datenpaket in Abhängigkeit von den Vergleichsergebnissen gebildet, die die ausgewählten Abtastwerte aus dem zeitlich vorhergehenden Datenpaket liefern. Diese Ausgestaltung führt dazu, dass die Grenzen der Datenpakete in Abhängigkeit von dem zeitlichen Abstand der ausgewählten Abtastwerte zu Signalflanken des Sendedatenstroms variieren. Die Auswahl der Abtastwerte passt sich adaptiv an den aktuellen Sendedatenstrom an. Infolgedessen kann es sein, dass Abtastwerte in zwei aufeinanderfolgenden Datenpaketen doppelt enthalten sind oder dass einzelne Abtastwerte in keinem Datenpaket enthalten sind und dementsprechend überhaupt nicht zur Auswahl stehen.

In einer weiteren Ausgestaltung wählt der Prozessdatenempfänger die zweite Anzahl an Abtastwerten in Abhängigkeit von den Vergleichsergebnissen aus.

In dieser Ausgestaltung bildet der Prozessdatenempfänger gewissermaßen eine Maske mit äquidistanten Löchern, wobei die Maske in Abhängigkeit von den Vergleichsergebnissen über die zur Auswahl stehenden Abtastwerte gelegt wird. Die Position der Maske relativ zu den Abtastwerten hängt von den Vergleichsergebnissen ab. Diese Ausgestaltung trägt dazu bei, dass sich die Auswahl der geeigneten Abtastwerte sehr schnell an den aktuell empfangenen Sendedatenstrom anpasst.

In einer weiteren Ausgestaltung wählt der Prozessdatenempfänger aus einem ersten Datenpaket erste äquidistante Abtastwerte aus, und er wählt aus einem zweiten Datenpaket zweite äquidistante Abtastwerte aus, wobei die ersten und zweiten Abtastwerte insgesamt äquidistant zueinander verteilt sind, wenn die ersten Abtastwerte und ihre jeweiligen rechtsseitigen und linksseitigen Nachbarn jeweils gleich sind.

In dieser Ausgestaltung behält der Prozessdatenempfänger eine "Maskenposition", anhand der er die ersten Abtastwerte aus dem ersten Datenpaket ausgewählt hat, auch für die Auswahl der zweiten Abtastwerte aus dem nachfolgenden zweiten Datenpaket bei, solange die Vergleichsergebnisse keinen Hinweis darauf enthalten, dass ausgewählte Abtastwerte im Bereich einer Signalflanke des Sendedatenstroms liegen. Infolgedessen sind die ausgewählten Abtastwerte über mehrere Datenpakete hinweg äquidistant verteilt. Die Ausgestaltung ermöglicht eine sehr einfache und schnelle Auswahl von geeigneten Abtastwerten.

In einer weiteren Ausgestaltung sind die zweiten Abtastwerte relativ zu den ersten Abtastwerten verschoben, wenn zumindest ein erster Abtastwert ungleich mit seinem rechtsseitigen oder linksseitigen Nachbarn ist.

In dieser Ausgestaltung verändert der Prozessdatenempfänger die Maskenposition für die Auswahl der zweiten Abtastwerte aus dem zweiten Datenpaket, wenn zumindest ein Abtastwert aus dem ersten Datenpaket im Bereich einer Signalflanke des Sendedatenstroms liegt. Mit dieser Ausgestaltung reagiert der Prozessdatenempfänger sehr schnell auf eine ungünstige Auswahl von Abtastwerten. Dementsprechend werden Fehler bei der Rekonstruktion der Prozessdatenempfänger minimiert.

In einer weiteren Ausgestaltung versendet der Prozessdatensender die aktuellen Prozessdaten mit einem Leitungscode, insbesondere einem 4B5B Leitungscode, der so ausgebildet ist, dass in jedem Datenpaket zumindest ein Symbolwechsel auftritt.

Ein Leitungscode legt fest, wie der Sendedatenstrom auf der physikalischen Ebene übertragen wird, d.h. auf der untersten Ebene des OSI-Referenzmodells. Bevorzugt verwenden das neue Verfahren und der neue Prozessdatenempfänger einen binären Leitungscode, bei dem zwei verschiedene Signalzustände die logischen Zustände 0 und 1 repräsentieren. Prinzipiell können das neue Verfahren und der entsprechende Prozessdatenempfänger aber auch mit einem höherwertigen Leitungscode, etwa einem ternären Leitungscode, realisiert werden. In jedem Fall ist es von Vorteil, wenn der Leitungscode auch dann Signalwechsel beinhaltet, wenn sich die logischen Zustände der zu übertragenden Prozessdaten über einen längeren Zeitraum nicht verändern, beispielsweise weil Sensoren der Anlage einen unbetätigten Zustand (= logisch 0) über einen langen Zeitraum besitzen. Wenn die Länge der Datenpakete so gewählt ist, dass zumindest ein Symbolwechsel in jedem Datenpaket auftritt, lässt sich mit dem oben beschriebenen Vergleich der ausgewählten Abtastwerte mit ihren jeweiligen Nachbarn sicherstellen, dass die ausgewählten Abtastwerte geeignet sind, um die übertragenen Prozessdaten fehlerfrei zu rekonstruieren. Die Ausgestaltung beinhaltet daher in den bevorzugten Varianten, dass ein Leitungscode verwendet wird, der selbst bei langen logischen 0- oder 1-Folgen Symbolwechsel erzeugt, wobei die Länge der Datenpakete so gewählt ist, dass zumindest ein Symbolwechsel in jedes Datenpaket fällt.

In einer weiteren Ausgestaltung ist der Faktor gleich 4 und die zweite Anzahl vorzugsweise gleich 5.

Ein 4B5B Leitungscode überträgt fünf binäre Datensymbole, die zusammen jeweils vier binäre Nutzdatenbits repräsentieren. Der 4B5B Leitungscode fügt daher Redundanzbits in den Sendedatenstrom ein, was eine Fehlerkorrektur oder zumindest eine Fehlererkennung ermöglicht. Darüber hinaus gewährleistet der 4B5B Code, dass zumindest nach vier gleichen Datensymbolen ein Symbolwechsel auftritt. Daher eignet sich der 4B5B Leitungscode sehr gut für eine kostengünstige Realisierung des neuen Verfahrens. Wenn der Faktor der Überabtastung dann noch gleich 4 gewählt wird und die zweite Anzahl, d.h. die Anzahl der ausgewählten Abtastwerte aus jedem Datenpaket, gleich 5 ist, liefert jedes Datenpaket fünf Bits, aus denen die vier Nutzdatenbits des Sendedatenstroms sehr einfach und schnell rekonstruiert werden können.

In einer weiteren Ausgestaltung erzeugt der Prozessdatenempfänger ein erstes und ein zweites Taktsignal, die um 90° phasenverschoben zueinander sind, wobei der Prozessdatenempfänger den Sendedatenstrom mit jeder einzelnen Flanke des ersten und des zweiten Taktsignals abtastet.

Diese Ausgestaltung ermöglicht auf eine sehr einfache und kostengünstige Weise eine vierfache Überabtastung des Sendedatenstroms, wobei der Prozessdatenempfänger lediglich zwei phasenverschobene Taktsignale benötigt, deren Taktfrequenz der Symbolrate des Sendedatenstroms entspricht. In einem bevorzugten Ausführungsbeispiel liegt die Taktfrequenz des ersten und des zweiten Taktsignals oberhalb von 100 MHz, insbesondere bei 125 MHz. In diesem Fall beträgt die Abtastrate bei einer Vierfachabtastung 500 MHz.

In einer weiteren Ausgestaltung weist der Prozessdatenempfänger ein Logikarray mit einer Vielzahl von zueinander parallelen Datenpfaden auf, wobei die parallelen Datenpfade mit einer Taktfrequenz arbeiten, die der definierten Symbolrate entspricht. In dem genannten Ausführungsbeispiel liegt die Symbolrate bei 125 MHz und dementsprechend arbeiten die parallelen Datenpfade jeweils mit 125 MHz. Das neue Verfahren ermöglicht es, die Prozessdaten mit einer Vierfach-Überabtastung zu rekonstruieren, ohne dass die zur Datenrekonstruktion verwendeten Datenpfade mit einer hohen Taktfrequenz von 500 MHz arbeiten müssen.

In einer weiteren Ausgestaltung verändert der Prozessdatenempfänger definierte Prozessdaten aus dem seriellen Datenstrom, um einen aktualisierten Sendedatenstrom zu erzeugen, und der Prozessdatenempfänger versendet den aktualisierten Sendedatenstrom über eine weitere Datenleitung. Bevorzugt versendet der Prozessdatenempfänger den aktualisierten Sendedatenrahmen on the fly, d.h. er versendet den aktualisierten Sendedatenstrom bereits zu einem Zeitpunkt, während er noch den Sendedatenstrom eines anderen Prozessdatensenders empfängt.

Diese Ausgestaltung macht sehr vorteilhaften Gebrauch von dem neuen Verfahren, da es das "Einsammeln" von Prozessdaten von einer Vielzahl von Stationen ermöglicht, die in einer logischen Reihe innerhalb einer Anlage angeordnet sind. Jede Station kann "ihre" Sendedaten in einen umlaufenden Datenstrom einfügen, der von Station zu Station gesendet wird. Die Ausgestaltung kombiniert die Vorteile des neuen Verfahrens in optimaler Weise mit den Anforderungen, die sich bei der Übertragung von Prozessdaten in einer automatisiert gesteuerten Anlage ergeben.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung einer modularen Steuerung zum sicherheitsrelevanten Steuern einer automatisierten Anlage, wobei ein Ausführungsbeispiel des neuen Verfahrens und des neuen Prozessdatenempfängers zur Anwendung kommen,
- Fig. 2: eine Ausführungsbeispiel für die Überabtastung,
- Fig. 3: eine vereinfachte Darstellung zur Erläuterung der Beziehungen zwischen Sendedatenstrom und Empfängerdatenstrom,
- Fig. 4: den Empfängerdatenstrom aus Fig. 3 mit einer Maske, die die Auswahl von geeigneten Abtastwerten symbolisiert,
- Fig. 5: den Empfängerdatenstrom aus Fig. 3 und 4 zusammen mit zwei Datenpaketen, mit deren Hilfe die geeigneten Abtastwerte ausgewählt werden,
- Fig. 6: die Anpassung der Auswahlmaske in Abhängigkeit von einem Vergleich zwischen ausgewählten Abtastwerten und ihren jeweiligen Nachbarn,
- Fig. 7: ein weiteres Beispiel für die Anpassung der Auswahlmaske, und
- Fig. 8: ein weiteres Beispiel, wobei ein zweites Datenpaket in Abhängigkeit von den Vergleichsergebnissen der Abtastwerte aus einem ersten Datenpaket bestimmt wird.

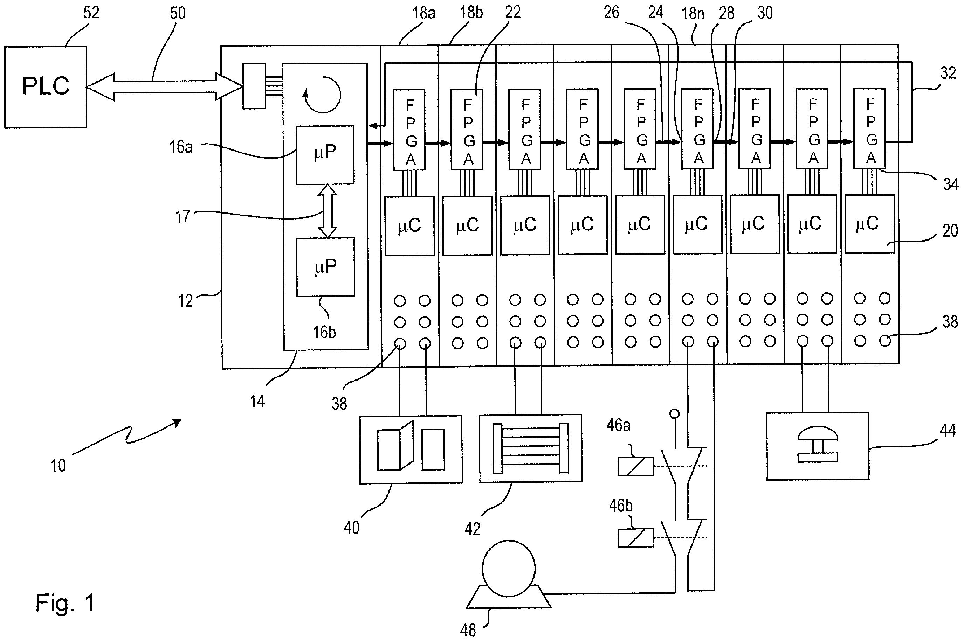

In Fig. 1 ist eine Vorrichtung, bei der ein Ausführungsbeispiel des neuen Verfahrens und des neuen Prozessdatenempfängers zur Anwendung kommt, in ihrer Gesamtheit mit der Bezugsziffer 10 bezeichnet.

Die Vorrichtung 10 ist in diesem Fall eine modulare Steuerung, die zur automatisierten Steuerung einer technischen Anlage dient. Beispielsweise ist die technische Anlage eine Produktionslinie eines Autoherstellers, ein Transportband an einem Flughafen oder eine andere Anlage, von deren Betrieb eine Gefahr für Personen im Umfeld der Anlage ausgeht. In den bevorzugten Ausführungsbeispielen ist die Steuerung in der Lage, sicherheitsrelevante Funktionen und Standardfunktionen zu steuern. Letzteres sind Funktionen, die den normalen Betriebsablauf der Anlage betreffen. Ersteres sind Funktionen, die vor allem dazu dienen, Unfälle und Verletzungen durch den Betrieb der Anlage zu vermeiden. Prinzipiell kann das neue Verfahren und der entsprechende Prozessdatenempfänger jedoch auch bei anderen Steuerungen eingesetzt werden, insbesondere Steuerungen, die ausschließlich normale Betriebsfunktionen einer Anlage steuern, oder bei reinen Sicherheitssteuerungen, die ausschließlich Sicherheitsfunktionen steuern.

Die Steuerung 10 besitzt hier ein Kopfteil 12, das in diesem Fall eine fehlersichere Auswerte- und Steuereinheit 14 aufweist. In den bevorzugten Ausführungsbeispielen besitzt die Auswerte- und Steuereinheit 14 zumindest zwei Prozessoren 16a, 16b, die ein Steuerprogramm redundant zueinander ausführen und sich gegenseitig überwachen. Dies ist in Fig. 1 durch einen Doppelpfeil 17 vereinfacht dargestellt. Fehlersicher bedeutet hier, dass das Kopfteil 12 zumindest die Anforderungen gemäß SIL2 der internationalen Norm IEC 61508 und/oder die Anforderungen PL d gemäß der Norm EN ISO 13849-1 oder vergleichbare Anforderungen erfüllt.

Die Steuerung 10 beinhaltet ferner eine Reihe von E/A-Einheiten 18a, 18b, ... 18n .... Die E/A-Einheiten 18 dienen zur Aufnahme und Ausgabe von Signalen, mit denen die Steuerung 10 den Betrieb der Anlage beeinflusst. In einem bevorzugten Ausführungsbeispiel sind die E/A-Einheiten elektrisch und mechanisch mit dem Kopfteil 12 verbunden, wie dies in Fig. 1 vereinfacht dargestellt ist. In anderen Ausführungsbeispielen ist es möglich, dass die E/A-Einheiten 18 getrennt von dem Kopfteil 12 bzw. getrennt von einer dem Kopfteil 12 entsprechenden Steuerung angeordnet sind und lediglich über eine nachfolgend näher erläuterte Kommunikationsverbindung mit dem Kopfteil 12 kommunizieren.

Im vorliegenden Ausführungsbeispiel besitzt jede E/A-Einheit 18 einen Steuerbaustein 20, der beispielsweise mit Hilfe eines Mikrocontrollers realisiert ist. Anstelle eines Mikrocontrollers kann der Steuerbaustein 20 auch als ASIC, als FPGA, mit Hilfe von leistungsfähigeren Mikroprozessoren oder mit vergleichbaren Logikbausteinen realisiert sein.

Des Weiteren besitzt jede E/A-Einheit 18 einen Kommunikationsbaustein 22, der in bevorzugten Ausführungsbeispielen als FPGA realisiert ist. Prinzipiell ist es möglich, dass der Kommunikationsbaustein 22 und der Steuerbaustein 20 zu einem gemeinsamen Kommunikations- und Steuerbaustein integriert sind und/oder dass die Funktion des Kommunikationsbausteins 22 durch geeignete Programmierung eines Mikrocontrollers realisiert ist.

Der Kommunikationsbaustein 22 besitzt einen Eingang 24, an den eine erste Datenleitung 26 angeschlossen ist, sowie einen Ausgang 28, an den eine zweite Datenleitung 30 angeschlossen ist (dargestellt in Fig. 1 am Beispiel der E/A-Einheit 18n). In dem bevorzugten Ausführungsbeispiel bilden die erste Datenleitung 26 und die zweite Datenleitung 30 zusammen eine serielle Datenleitung, die durch sämtliche Kommunikationsbausteine 22 der E/A-Einheiten 18 geführt ist. In dem dargestellten Ausführungsbeispiel verbindet die serielle Datenleitung die E/A-Einheiten 18 mit dem Kopfteil 12. Vom letzten Kommunikationsbaustein 22 in der Reihe ist eine weitere Datenleitung 32 zurück zur Auswerte- und Steuereinheit 14 des Kopfteils 12 geführt, so dass sich insgesamt eine Ringleitung ergibt, über die die Auswerte- und Steuereinheit 14 des Kopfteils 12 mit den E/A-Einheiten 18 kommunizieren kann. In diesem bevorzugten Ausführungsbeispiel ist jede E/A-Einheit 18 sowohl ein Prozessdatenempfänger als auch ein Prozessdatensender, da jeder Kommunikationsbaustein 22 an seinem Eingang 24 Prozessdaten eines vorhergehenden Kommunikationsbausteins 22 empfängt und - ggf. modifizierte - Prozessdaten an seinem Ausgang 28 versendet. Gleiches gilt hier für die Auswerte- und Steuereinheit 14, die prinzipiell dasselbe FPGA beinhalten kann wie die E/A-Einheiten (hier nicht dargestellt).

Das neue Verfahren ist nicht auf die hier dargestellte Ringleitung beschränkt. Es kann gleichermaßen mit anderen Topologien verwendet werden, beispielsweise mit einer einfachen Punkt-zu-Punkt-Verbindung, in einer Sterntopologie oder in einer Baumtopologie. Das Verfahren eignet sich jedoch besonders für die dargestellte Linien- und/oder Ringtopologie.

Jeder Kommunikationsbaustein 22 besitzt hier einen weiteren Ausgang 34, an dem der Kommunikationsbaustein 22 Prozessdaten für den Steuerbaustein 20 zur Verfügung stellt. Der Ausgang 34 kann ein Register oder Speicherbereich oder ein logischer Datenübergabepunkt in einem Ablaufprogramm sein, wenn der Kommunikationsbaustein 22 in dem Steuerbaustein 20 integriert ist.

Umgekehrt kann der Kommunikationsbaustein 22 Prozessdaten von dem Steuerbaustein 20 aufnehmen und in den seriellen Datenstrom integrieren, der über den Ausgang 28 zum nächstfolgenden Kommunikationsbaustein gesendet wird. Dementsprechend kann der Ausgang 34 eine bidirektionale Eingabe- und Ausgabeschnittstelle sein.

Jede E/A-Einheit 18 besitzt eine Vielzahl von Anschlüssen 38, an denen Sensoren und/oder Aktoren angeschlossen werden können. Beispielhaft sind hier ein Schutztürschalter 40, ein Lichtgitter 42, ein Not-Aus-Taster 44 und zwei Schütze 46a, 46b dargestellt. Mit Hilfe der Schütze 46a, 46b kann die Steuerung 10 die Stromversorgung zu einem elektrischen Motor 48 unterbrechen, wenn beispielsweise der Schutztürsensor 40 signalisiert, dass eine Schutztür geöffnet wurde.

Die Sensoren 40, 42, 44 und Aktoren 46, 48 sind hier beispielhaft dargestellt. In der Praxis können weitere Sensoren und/oder Aktoren an die Steuerung 10 angeschlossen sein, etwa Drehzahlsensoren, Temperatursensoren, Positionssensoren oder Magnetventile.

Die Auswerte- und Steuereinheit 14 sammelt über die E/A-Einheiten 18 in - vorzugsweise zyklisch - wiederkehrenden Zeitintervallen Prozessdaten ein, die jeweils einen aktuellen Zustand der Sensoren und Aktoren repräsentieren. Anschließend verarbeitet die Auswerte- und Steuereinheit 14 die eingesammelten Prozessdaten und erzeugt in Abhängigkeit davon weitere Prozessdaten, die an die Steuerbausteine 20 der E/A-Einheiten 18 übertragen werden. Die weiteren Prozessdaten können beispielsweise einen Steuerbefehl beinhalten, der dazu führt, dass die Stromversorgung für den Motor 48 mit Hilfe der Schütze 46 unterbrochen wird. Des Weiteren können die Prozessdaten Informationen beinhalten, die einen aktuellen Zustand der E/A-Einheiten selbst betreffen, insbesondere Diagnoseinformationen und/oder Konfigurationsinformationen.

In einem Ausführungsbeispiel erzeugt die Auswerte- und Steuereinheit 14 in zyklisch wiederkehrenden Intervallen einen Sendedatenstrom, der über die Datenleitungen 26, 30, 32 von einer E/A-Einheit 18 zur nächsten weitergereicht wird. Jede E/A-Einheit 18 liest zugeordnete Daten aus dem empfangenen Sendedatenstrom, und sie schreibt aktuelle Prozessdaten in den Sendedatenstrom, der an die nächste E/A-Einheit und letztlich an die Auswerte- und Steuereinheit 14 übertragen wird. Auf diese Weise kann die Auswerte- und Steuereinheit 14 die Prozessdaten aller angeschlossenen E/A-Einheiten 18 einsammeln und mit den einzelnen E/A-Einheiten 18 kommunizieren. Darüber hinaus ist prinzipiell auch eine Querkommunikation zwischen E/A-Einheiten möglich, wenn dies beispielsweise für eine schnelle dezentrale Abschaltung des Motors 48 beim Öffnen der Schutztür 40 gewünscht ist.

In den bevorzugten Ausführungsbeispielen besitzt die Steuerung 10 neben der "internen" Kommunikationsverbindung zu den E/A-Einheiten 18 noch eine externe Kommunikationsverbindung, die in Fig. 1 vereinfacht durch den Doppelpfeil 50 dargestellt ist. Die externe Kommunikationsverbindung kann ein Feldbus sein, über den der Kopfteil 12 mit anderen Einheiten kommuniziert, beispielsweise mit einer anderen Steuerung 52. Das neue Verfahren eignet sich besonders gut für die zyklische Kommunikation der Auswerte- und Steuereinheit 14 mit den E/A-Einheiten 18, um Prozessdaten der E/A-Einheiten 18 einzusammeln und weitere Prozessdaten an die E/A-Einheiten 18 auszugeben. Prinzipiell kann das neue Verfahren jedoch auch für eine azyklische Kommunikation zwischen der Auswerte- und Steuereinheit 14 und den E/A-Einheiten 18 und/oder für eine zyklische oder azyklische Kommunikation über die externe Kommunikationsverbindung 50 verwendet werden.

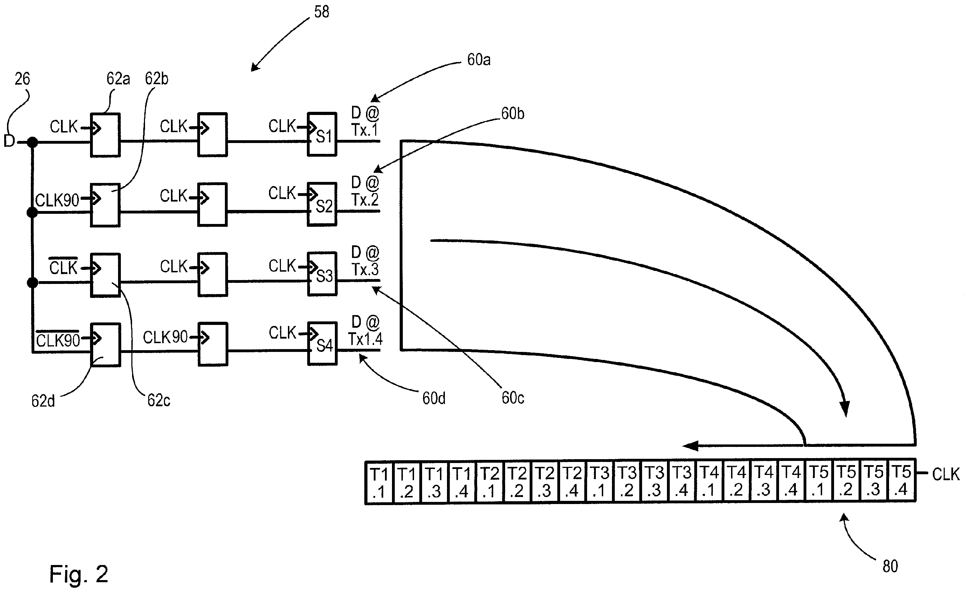

In Fig. 2 ist mit der Bezugsziffer 58 ein Logikarray bezeichnet, das vier parallele Datenpfade 60a, 60b, 60c und 60d aufweist. Jeder Datenpfad 60 besitzt drei Flipflops 62, die in Reihe verbunden sind. Das jeweils erste Flipflop 62a, 62b, 62c, 62d ist mit dem Sendedatenstrom verbunden, den der Kommunikationsbaustein 22 über den Eingang 26 empfängt.

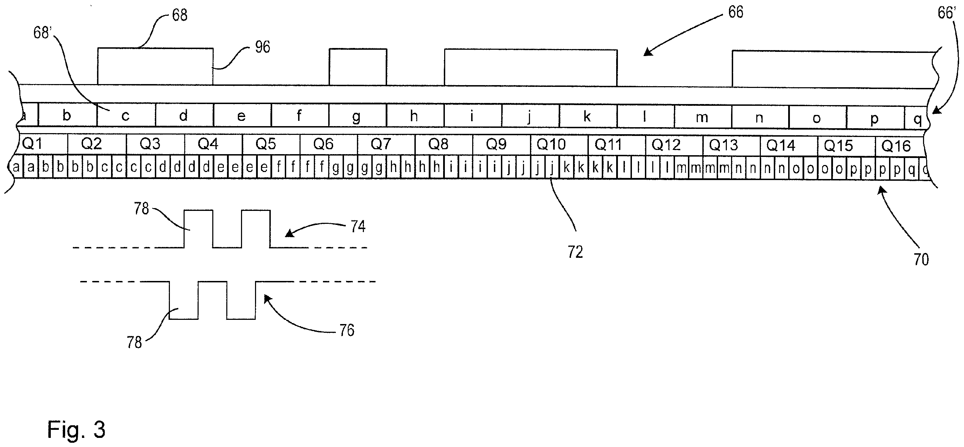

Fig. 3 zeigt den Sendedatenstrom 66 in einer schematischen Darstellung. Der Sendedatenstrom 66 besteht aus einer Vielzahl von seriell aufeinanderfolgenden Datensymbolen 68. In bevorzugten Ausführungsbeispielen sind die Datensymbole 68 binäre Symbole, die entweder einem hohen oder einen niedrigen Spannungspegel auf der Datenleitung entsprechen. Wenn mehrere Datensymbole mit hohem Spannungspegel aufeinanderfolgen, ergibt sich ein über mehrere Datensymbole hinweg hoher Spannungspegel. Gleichwohl sind die einzelnen Datensymbole voneinander zu unterscheiden, was in Fig. 3 bei der Bezugsziffer 66 anhand der Buchstaben a, b, c, ... dargestellt ist.

Unterhalb des Sendedatenstroms 66 ist in Fig. 3 ein Empfängerdatenstrom 70 dargestellt, der eine Vielzahl von Abtastwerten 72 beinhaltet. Im dargestellten Ausführungsbeispiel ergibt sich der Empfängerdatenstrom 70 aus einer vierfachen Überabtastung des Sendedatenstroms 66. Dementsprechend gibt es zu jedem Datensymbol 68 vier Abtastwerte 72, die den logischen Wert des abgetasteten Datensymbols besitzen.

In einem bevorzugten Ausführungsbeispiel verwendet der Kommunikationsbaustein 22 zwei Taktsignale 74, 76, die um 90° gegeneinander phasenverschoben sind. Mit jeder einzelnen Flanke 78 der beiden Taktsignale wird ein Abtastwert 72 aus dem Sendedatenstrom 66 erzeugt. In der praktischen Realisierung erfolgt die vierfache Überabtastung mit Hilfe des Logikarrays 58, indem die jeweils ersten Flipflops 62a-62d in jedem Datenpfad 60 auf die vier verschiedenen Flanken der beiden Taktsignale 74, 76 reagieren. Im dargestellten Fall übernimmt das Flipflop 62a im ersten Datenpfad 60a den Pegelwert des am Eingang 26 anliegenden Datensymbols bei jeder positiven Flanke 78 des ersten Taktsignals 74. Das erste Flipflop 62b im zweiten Datenpfad 60b übernimmt den Pegelwert des am Eingang 26 anliegenden Datensymbols bei jeder positiven Flanke des zweiten Taktsignals 76. Da die beiden Taktsignale 74, 76 um 90° zueinander phasenverschoben sind, tasten die beiden Flipflops 62a, 62b ein am Eingang 26 anliegendes Datensymbol zu unterschiedlichen Zeitpunkten ab. Das Flipflop 62c im dritten Datenpfad 60c übernimmt den Pegelwert eines am Eingang 26 anliegenden Datensymbols bei jeder fallenden Flanke des ersten Taktsignals 74. Das Flipflop 62d im vierten Datenpfad 60d übernimmt den jeweiligen Pegelwert eines am Eingang 26 anliegenden Datensymbols bei jeder fallenden Flanke des zweiten Taktsignals 76. Insgesamt tasten vier parallele Flipflops 62a bis 62d den am Eingang 26 anliegenden Sendedatenstrom daher zu vier verschiedenen aufeinanderfolgenden Zeitpunkten ab. Da die Taktfrequenz der beiden Taktsignale 74, 76 in dem bevorzugten Ausführungsbeispiel in etwa gleich der Symbolrate des Sendedatenstroms 66 ist, liefern die Flipflops 62a bis 62d vier aufeinanderfolgende Abtastwerte für jedes Datensymbol 68 des Sendedatenstroms 66. Mit den weiteren Flipflops in jedem der Datenpfade 60a bis 60d werden die Abtastwerte auf einen gemeinsamen Empfängersystemtakt synchronisiert und dann blockweise in ein Schieberegister 80 geschrieben, was in Fig. 2 symbolisch dargestellt ist. Sowohl das Logikarray 58 als auch das Schieberegister 80 sind Teil des Kommunikationsbausteins 22.

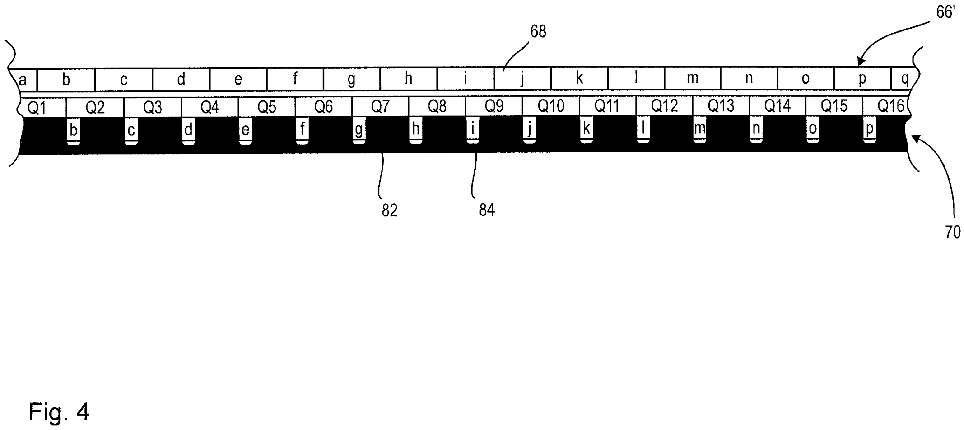

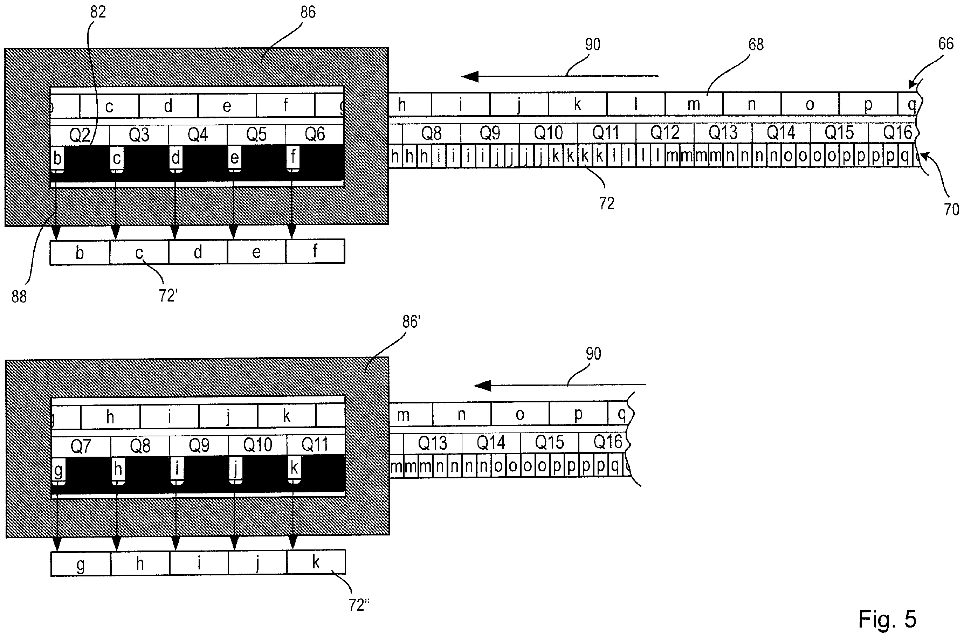

Zur Rekonstruktion der Prozessdaten aus dem Empfängerdatenstrom 70 genügt es, jeweils einen "geeigneten" Abtastwert pro Datensymbol 68 auszuwählen. Man kann daher eine symbolische Maske 82 mit einer Vielzahl von zueinander äquidistanten Maskenöffnungen 84 über den Empfängerdatenstrom 70 legen und die jeweils nicht-maskierten Abtastwerte an den Maskenöffnungen 84 auswählen, wie dies in Fig. 4 dargestellt ist. Es ist jedoch nicht erforderlich, den gesamten Empfängerdatenstrom 70 "als Ganzes" für die Auswahl der Abtastwerte 72 zu analysieren. Vielmehr genügt es, den Empfängerdatenstrom 70 abschnittsweise zu analysieren und geeignete Abtastwerte 72 abschnittsweise bzw. blockweise auszuwählen. Dies ist nachfolgend anhand Fig. 5 verdeutlicht.

Fig. 5 zeigt bei der Bezugsziffer 86 ein Fenster, das im Ausführungsbeispiel jeweils zwanzig Abtastwerte 72 aufnimmt. Aufgrund der vierfachen Überabtastung entspricht dies fünf Datensymbolen. Es ist nicht notwendig, dass das Fenster 86 exakt fünf Datensymbole aufnimmt. Vielmehr ist es zulässig, dass das Fenster 86 das erste und letzte Datensymbol jeweils "abschneidet", wie dies in Fig. 5 dargestellt ist. Trotzdem ist es möglich, aus den insgesamt zwanzig Abtastwerten fünf äquidistant zueinander angeordnete Abtastwerte 72' blockweise auszuwählen, wobei jeder ausgewählte Abtastwert 72' genau einem Datensymbol 68 des Sendedatenstroms 60 entspricht.

Mit anderen Worten wird der Empfängerdatenstrom 70 mit Hilfe des Fensters in Datenpakete 86 unterteilt. Aus jedem Datenpaket 86 wird anschließend eine definierte Anzahl an Abtastwerten 72' ausgewählt. Die ausgewählten Abtastwerte 72' sind äquidistant zueinander, wie sich anhand der symbolischen Maske 82 in Fig. 5 erkennen lässt. Die Auswahl der Abtastwerte 72' aus dem Datenpaket 86 erfolgt in den bevorzugten Ausführungsbeispielen mit Hilfe von zueinander parallelen Datenpfaden 88, die mit dem seriellen Schieberegister 80 verbunden sind. In dem bevorzugten Ausführungsbeispiel besitzt der Kommunikationsbaustein 22 fünf parallele Datenpfade 88, die eine zeitparallele Auswahl von jeweils fünf Abtastwerten 72' pro Datenpaket 86 ermöglichen. Sobald die fünf Abtastwerte 72' zeitparallel ausgewählt wurden, wird ein neues Datenpaket 86' gebildet, und es werden die nächsten Abtastwerte 72" zeitparallel ausgewählt. Die Bildung der Datenpakete 86, 86' ist in den bevorzugten Ausführungsbeispielen dadurch realisiert, dass der Empfängerdatenstrom 70 mit der Vielzahl der Abtastwerte 72 seriell durch das Schieberegister 80 geschoben wird, wie dies mit dem Pfeil 90 dargestellt ist.

Insgesamt rekonstruiert der Kommunikationsbaustein 22 in jeder E/A-Einheit 18 also schrittweise bzw. blockweise einen Teil der empfangenen Prozessdaten. Dabei werden die Sendedaten zunächst über ein Logikarray mit parallelen Datenpfaden 60 überabgetastet. Die überabgetasteten Empfängerdaten werden in ein serielles Schieberegister 80 geschrieben (vgl. Fig. 2). Aus dem seriellen Schieberegister werden die Prozessdaten rekonstruiert, indem aus der Vielzahl von Abtastwerten pro Datensymbol jeweils ein Abtastwert 72' pro Datensymbol ausgewählt wird. Die Auswahl erfolgt blockweise, indem jeweils ein Datenpaket 86 mit Hilfe von parallelen Datenpfaden 88 ausgewertet wird. In den dargestellten Ausführungsbeispielen ist die Anzahl N der Abtastwerte 72 pro Datenpaket 86 das Produkt aus dem Faktor der Überabtastung und der Anzahl der in einem Verarbeitungsschritt rekonstruierten Bits. Vorzugsweise werden zumindest drei Bits gleichzeitig ausgewählt und besonders bevorzugt ist es, jeweils fünf Bits gleichzeitig auszuwählen, was in dem dargestellten Ausführungsbeispiel zu N = 4 x 5 = 20 Abtastwerten pro Datenpaket führt.

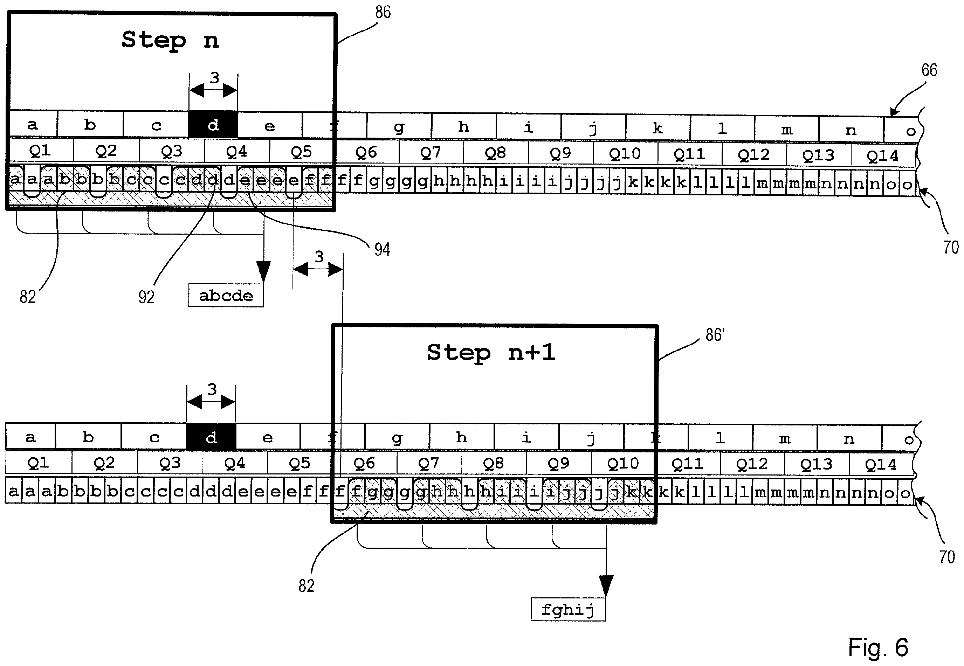

Die äquidistante Verteilung der ausgewählten Abtastwerte 72', 72" gewährleistet eine fehlerfreie Rekonstruktion der Prozessdaten, sofern die Auswahlmaske 82 in Bezug auf die Datenpakete 86 jeweils "richtig" positioniert ist. Die richtige Positionierung der Auswahlmaske 82 wird im bevorzugten Ausführungsbeispiel überprüft, indem die jeweils ausgewählten Abtastwerte 72', 72" mit ihren jeweiligen Nachbarabtastwerten 92, 94 verglichen werden. Dies ist in Fig. 6 am Beispiel des Abtastwertes "d" dargestellt. Der linksseitige Nachbar 92 repräsentiert ebenfalls das Datensymbol "d". Dementsprechend sind der ausgewählte Abtastwert "d" und sein linksseitiger Nachbar 92 gleich. Im Gegensatz dazu sind der ausgewählte Abtastwert "d" und sein rechtsseitiger Nachbar 94 ungleich, da der benachbarte Abtastwert 94 bereits das nächste Datensymbol "e" repräsentiert. Dementsprechend liegt der ausgewählte Abtastwert "d" im Bereich einer Signalflanke 96 des Sendedatenstroms 66 (vgl. Fig. 3), was im Hinblick auf eine fehlerfreie Reproduktion der Prozessdaten ungünstig ist. Daher wird die Auswahlmaske 82 beim nächsten Datenpaket 86' um einen Abtastwert nach links verschoben, so dass die dann ausgewählten Abtastwerte 72" weitgehend mittig in Bezug auf die Datensymbole 86 liegen. Dies ist in Fig. 6 symbolisch dargestellt und führt dazu, dass der Abstand zwischen dem ausgewählten Abtastwert "e" und dem ausgewählten Abtastwert "f" kleiner ist als die entsprechenden Abstände zwischen den ausgewählten Abtastwerten im ersten Datenpaket 86.

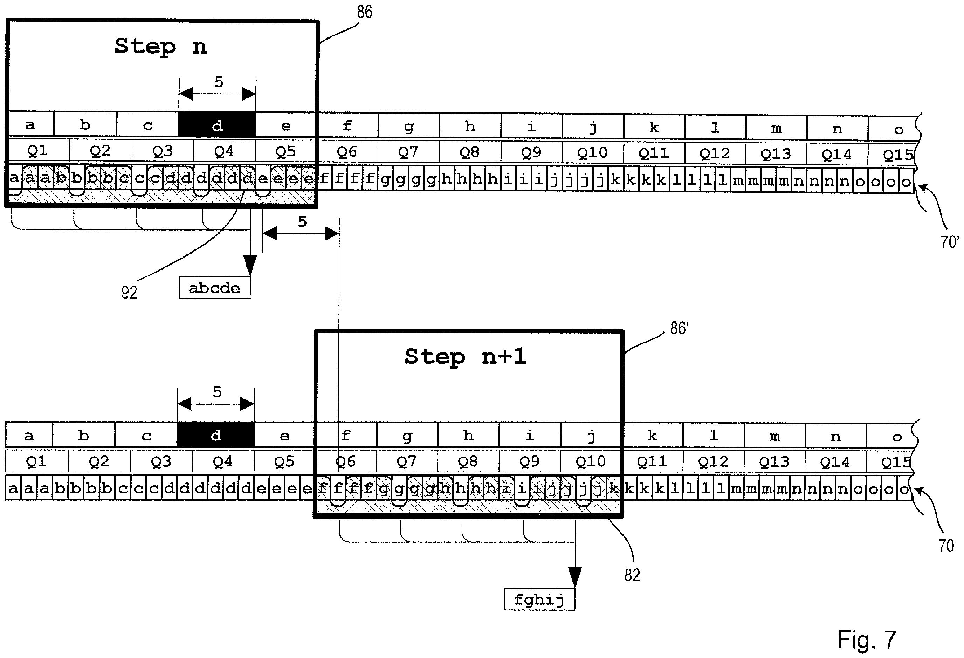

Im dargestellten Fall liegt die Signalflanke 96 rechts von dem ausgewählten Abtastwert "d" und daher wird die Auswahlmaske 82 um einen Abtastwert nach links verschoben. Fig. 7 zeigt den umgekehrten Fall, in dem ein ausgewählter Abtastwert "e" ungleich zu seinem linksseitigen Nachbarn 92 ist. Daher wird die Auswahlmaske 82 im nächsten Datenpaket 86' um einen Abtastwert nach rechts verschoben. Der relative Abstand zwischen dem ausgewählten Abtastwert "e" und dem ausgewählten Abtastwert "f" beträgt daher 5 (nicht-ausgewählte) Abtastwerte und ist somit größer als der relative Abstand zwischen den anderen ausgewählten Abtastwerten.

Allgemein verschiebt das neue Verfahren die Auswahlmaske 82 also stets um einen Abtastwert nach links oder rechts, wenn der Vergleich eines ausgewählten Abtastwertes 72', 72" mit seinen jeweiligen Nachbarn 92, 94 einen Unterschied ergibt, wobei die Maske 82 jeweils den von dem als ungleich erkannten Nachbarabtastwert weggeschoben wird.

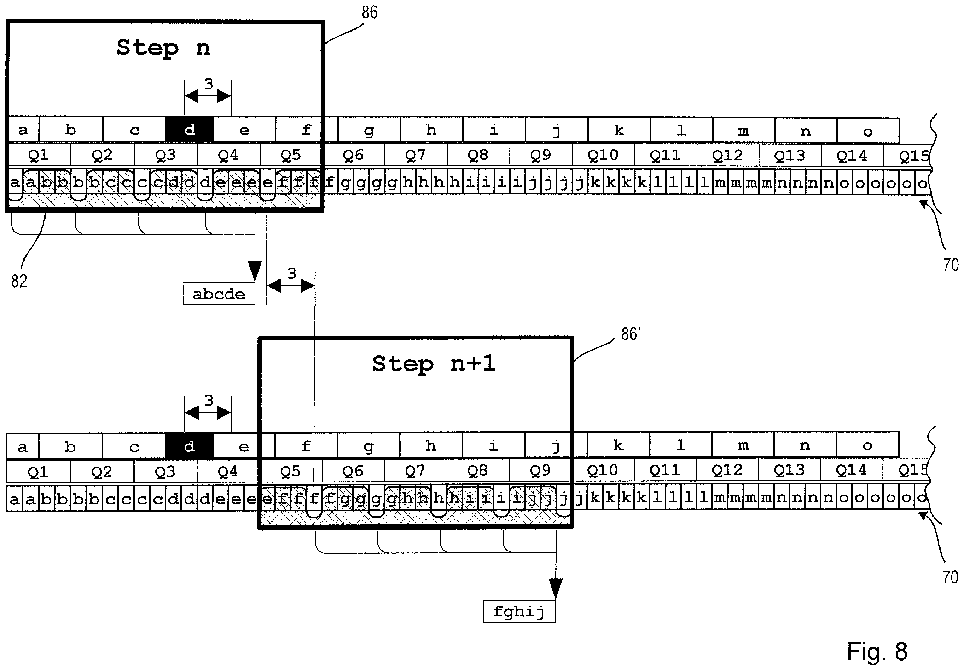

Wenn die Taktsignale 74, 76 im Kommunikationsbaustein 22 des Prozessdatenempfängers dem entsprechenden Sendetakt des Prozessdatensenders gleichmäßig voreilen oder nachlaufen, ist es möglich, dass die Auswahlmaske 82 nach mehreren Zyklen nicht mehr nach der oben beschriebenen Regel verschoben werden kann, ohne dass eine Maskenöffnung 84 aus dem Fenster 86 bzw. dem dadurch repräsentierten Datenpaket herausfällt. Beispielsweise ist es in der in Fig. 8 dargestellten Situation nicht möglich, die Maske 82 im Step n weiter nach links zu verschieben, ohne dass die Maskenöffnung 84 für die Auswahl des Abtastwertes "a" herausfällt. In einem solchen Fall wird die Maske 82 in den bevorzugten Ausführungsbeispielen vollständig an den entgegengesetzten Fensterrand geschoben, wie dies in Fig. 8 bei dem Step n + 1 dargestellt ist. Vorteilhafterweise wird in diesem Fall das Datenpaket 86' so bestimmt, dass die Abtastwerte für das Datensymbol "f" enthalten sind, da der Abtastwert "f" für das entsprechende Datensymbol anderenfalls verloren ginge. Wie in Fig. 8 dargestellt ist, muss das Datenpaket 86' daher die letzten vier Abtastwerte aus dem Datenpaket 86 erneut beinhalten, d.h. die Datenpakete 86, 86' überlappen sich teilweise in Bezug auf die enthaltenen Abtastwerte. Umgekehrt wird das Datenpaket 86' einige Abtastwerte überspringen, wenn die Auswahlmaske 82 vollständig in entgegengesetzter Richtung verschoben worden wäre (hier nicht dargestellt). Die Unterteilung des Empfängerdatenstroms 70 in die Datenpakete 86, 86' erfolgt hiernach also in Abhängigkeit von den Vergleichsergebnissen zwischen jedem ausgewählten Abtastwert und seinem rechtsseitigen und linksseitigen Nachbarn.

## Patentansprüche

1. Verfahren zum Übertragen von Prozessdaten in einer automatisiert gesteuerten Anlage, mit den Schritten
- Bereitstellen eines Prozessdatensenders (14), der in definierten wiederkehrenden Zeitintervallen jeweils aktuelle Prozessdaten über eine Datenleitung (26) versendet, und
- Bereitstellen eines Prozessdatenempfängers (18), der die Prozessdaten über die Datenleitung (26) empfängt,
wobei der Prozessdatensender (14) die Prozessdaten in Form eines seriellen Sendedatenstroms (66), der eine Vielzahl von Datensymbolen (68) mit einer definierten Symbolrate aufweist, über die Datenleitung (26) sendet,
wobei der Prozessdatenempfänger (18) den seriellen Sendedatenstrom (66) mit einer Abtastrate abtastet, die um einen definierten Faktor höher ist als die Symbolrate, um auf diese Weise einen seriellen Empfängerdatenstrom (70) mit einer Vielzahl von Abtastwerten (72) pro Datensymbol (68) zu erzeugen,
wobei der Prozessdatenempfänger (18) den seriellen Empfängerdatenstrom (70) in Datenpakete (86) unterteilt, die jeweils eine definierte erste Anzahl an Abtastwerten (72) aufweisen,
wobei der Prozessdatenempfänger (18) aus den jeweiligen Datenpaketen (86) eine definierte zweite Anzahl an Abtastwerten (72') auswählt,
wobei die zweite Anzahl um den definierten Faktor kleiner ist als die erste Anzahl, und
wobei der Prozessdatenempfänger die ausgewählten Abtastwerte (72') als empfangene Prozessdaten verarbeitet,
**gekennzeichnet dadurch, dass** die aus jedem Datenpaket (86) ausgewählten Abtastwerte (72') äquidistant zueinander sind, und dass jeder ausgewählte Abtastwert (72') einen rechtsseitigen und einen linksseitigen Nachbarn (92, 94) besitzt, und wobei der Prozessdatenempfänger (18) die ausgewählten Abtastwerte (72') mit ihren jeweiligen rechtsseitigen und linksseitigen Nachbarn (92, 94) vergleicht, um eine Vielzahl von Vergleichsergebnissen zu bestimmen.

2. Verfahren nach Anspruch 1, wobei der Prozessdatenempfänger (18) die definierte zweite Anzahl an Abtastwerten (72') zeitparallel aus den jeweiligen Datenpaketen (86) auswählt.

3. Verfahren nach Anspruch 1 oder 2, wobei der Prozessdatenempfänger die Datenpakete (86) in zeitlich aufeinander folgenden Schritten bildet.

4. Verfahren nach Anspruch 1, wobei der Prozessdatenempfänger (18) die Datenpakete (86) in Abhängigkeit von den Vergleichsergebnissen bildet.

5. Verfahren nach Anspruch 1 oder 4, wobei der Prozessdatenempfänger (18) die zweite Anzahl an Abtastwerten (72') in Abhängigkeit von den Vergleichsergebnissen auswählt.

6. Verfahren nach Anspruch 5, wobei der Prozessdatenempfänger aus einem ersten Datenpaket (86) erste äquidistante Abtastwerte (72') auswählt und aus einem zweiten Datenpaket (86') zweite äquidistante Abtastwerte (72") auswählt, wobei die ersten und zweiten Abtastwerte (72', 72") äquidistant zueinander verteilt sind, wenn die ersten Abtastwerte (72') und ihre jeweiligen rechtsseitigen und linksseitigen Nachbarn (92, 94) jeweils gleich sind.

7. Verfahren nach Anspruch 6, wobei die zweiten Abtastwerte (72") relativ zu den ersten Abtastwerten (72') verschoben sind, wenn zumindest ein erster Abtastwert (72') ungleich mit seinem rechtsseitigen oder linksseitigen Nachbarn (92, 94) ist.

8. Verfahren nach einem der Ansprüche 1 bis 7, wobei der Prozessdatensender (14) die aktuellen Prozessdaten mit einem Leitungscode, versendet, der so ausgebildet ist, dass in jedem Datenpaket (86) zumindest ein Symbolwechsel (96) auftritt, insbesondere mit einem 4B5B Leitungscode.

9. Verfahren nach einem der Ansprüche 1 bis 8, wobei der Faktor zumindest gleich vier ist, vorzugsweise genau gleich vier, und wobei die zweite Anzahl vorzugsweise gleich fünf ist.

10. Verfahren nach einem der Ansprüche 1 bis 9, wobei der Prozessdatenempfänger (18) ein erstes und ein zweites Taktsignal (74, 76) erzeugt, die um 90° phasenverschoben sind, und wobei der Prozessdatenempfänger den Sendedatenstrom mit jeder einzelnen Flanke (78) des ersten und des zweiten Taktsignals (74, 76) abtastet.

11. Verfahren nach Anspruch 10, wobei das erste und zweite Taktsignal (74, 76) jeweils eine Taktfrequenz aufweisen, die der definierten Symbolrate entspricht.

12. Verfahren nach einem der Ansprüche 1 bis 11, wobei der Prozessdatenempfänger (18) ein Logikarray (58) mit einer Vielzahl von zueinander parallelen Datenpfaden (60) aufweist, wobei die parallelen Datenpfade (60) mit einer Taktfrequenz arbeiten, die der definierten Symbolrate entspricht.

13. Verfahren nach einem der Ansprüche 1 bis 12, wobei der Prozessdatenempfänger (18) definierte Prozessdaten aus dem seriellen Sendedatenstrom (66) verändert, um einen aktualisierten Sendedatenstrom zu erzeugen, und wobei der Prozessdatenempfänger den aktualisierten Sendedatenstrom über eine weitere Datenleitung (30) versendet.

14. Prozessdatenempfänger zum Empfangen von Prozessdaten in einer automatisiert gesteuerten Anlage, in der ein Prozessdatensender (14) in definierten wiederkehrenden Zeitintervallen jeweils aktuelle Prozessdaten über eine Datenleitung (26) versendet, wobei der Prozessdatensender die Prozessdaten in Form eines seriellen Sendedatenstroms (66), der eine Vielzahl von Datensymbolen (68) mit einer definierten Symbolrate aufweist, über die Datenleitung (26) sendet, mit einem Eingang (24) zu Aufnehmen des seriellen Sendedatenstroms, mit einem Kommunikationsbaustein (22), die die Prozessdaten aus dem seriellen Sendedatenstrom (66) extrahiert, und mit einem Ausgang (34), wobei der Kommunikationsbaustein (22) den seriellen Sendedatenstrom (66) mit einer Abtastrate abtastet, die um einen definierten Faktor höher ist als die Symbolrate, um auf diese Weise einen seriellen Empfängerdatenstrom (70) mit einer Vielzahl von Abtastwerten (72) pro Datensymbol (68) zu erzeugen, wobei der Kommunikationsbaustein (22) den seriellen Empfängerdatenstrom (70) in Datenpakete (86) unterteilt, die jeweils eine definierte erste Anzahl an Abtastwerten (72) aufweisen, wobei der Kommunikationsbaustein (22) aus den jeweiligen Datenpaketen (86) eine definierte zweite Anzahl an Abtastwerten (72') auswählt, wobei die zweite Anzahl um den definierten Faktor kleiner ist als die erste Anzahl, und wobei der Kommunikationsbaustein (22) die ausgewählten Abtastwerte an dem Ausgang (34) zur Verfügung stellt, **gekennzeichnet dadurch, dass** die aus jedem Datenpaket (86) ausgewählten Abtastwerte (72') äquidistant zueinander sind, und dass jeder ausgewählte Abtastwert (72') einen rechtsseitigen und einen linksseitigen Nachbarn (92, 94) besitzt, und wobei der Prozessdatenempfänger (18) die ausgewählten Abtastwerte (72') mit ihren jeweiligen rechtsseitigen und linksseitigen Nachbarn (92, 94) vergleicht, um eine Vielzahl von Vergleichsergebnissen zu bestimmen.

## Claims

1. A method for transmitting process data in an automatically controlled installation, the method comprising the steps of:
- providing a process data transmitter (14) which transmits respective current process data via a data line (26) at defined recurring time intervals, and
- providing a process data receiver (18) which receives the process data via the data line (26),
wherein the process data transmitter (14) transmits the process data via the data line (26) in the form of a serial transmit data stream (66) comprising a plurality of data symbols (68) at a defined symbol rate,
wherein the process data receiver (18) samples the serial transmit data stream (66) at a sampling rate which is higher than the symbol rate by a defined factor in order to thereby generate a serial receiver data stream (70) comprising a plurality of sampling values (72) per data symbol (68),
wherein the process data receiver (18) subdivides the serial receiver data stream (70) into data packets (86), each of which has a defined first number of sampling values (72),
wherein the process data receiver (18) selects a defined second number of sampling values (72') from the respective data packets (86),
wherein the second number is smaller than the first number by the defined factor, and
wherein the process data receiver processes the selected sampling values (72') as received process data,
**characterized in that** the sampling values (72') selected from each data packet (86) are equidistant from one another and each selected sampling value (72') has a right-side and left-side neighbor (92, 94), and wherein the process data receiver (18) compares the selected sampling values (72') with their respective right-side and left-side neighbors (92, 94) in order to determine a plurality of comparison results.

2. The method of Claim 1, wherein the process data receiver (18) selects the defined second number of sampling values (72') simultaneously from the respective data packets (86).

3. The method of Claim 1 or 2, wherein the process data receiver forms the data packets (86) in temporally consecutive steps.

4. The method of Claim 1, wherein the process data receiver (18) forms the data packets (86) depending on the comparison results.

5. The method of Claim 1 or 4, wherein the process data receiver (18) selects the second number of sampling values (72') depending on the comparison results.

6. The method of Claim 5, wherein the process data receiver selects first equidistant sampling values (72') from a first data packet (86), and selects second equidistant sampling values (72") from a second data packet (86'), wherein the first and second sampling values (72', 72") are distributed equidistantly if the first sampling values (72') and their respective right-side and left-side neighbors (92, 94) are in each case equal.

7. The method of Claim 6, wherein the second sampling values (72") are shifted in relation to the first sampling values (72') if at least one first sampling value (72') is not equal to its right-side or left side neighbor (92, 94).

8. The method of one of Claims 1 to 7, wherein the process data transmitter (14) transmits the current process data with a line code which is designed in such a way that at least one symbol change (96) occurs in each data packet (86), in particular with a 4B5B line code.

9. The method of one of Claims 1 to 8, wherein the factor is at least equal to four, preferably exactly equal to four, and wherein the second number is preferably equal to five.

10. The method of one of Claims 1 to 9, wherein the process data receiver (18) generates a first and a second clock signal (74, 76) which are phase-shifted by 90°, and wherein the process data receiver samples the transmit data stream with each individual edge (78) of the first and of the second clock signal (74, 76).

11. The method of Claim 10, wherein the first and second clock signals (74, 76) each have a clock frequency which corresponds to the defined symbol rate.

12. The method of one of Claims 1 to 11, wherein the process data receiver (18) has a logic array (58) with a plurality of data paths (60) parallel to one another, wherein the parallel data paths (60) operate at a clock frequency which corresponds to the defined symbol rate.

13. The method of one of Claims 1 to 12, wherein the process data receiver (18) modifies process data from the serial data stream (66) in order to generate an updated transmit data stream, and wherein the process data receiver transmits the updated transmit data stream via a further data line (30).

14. A process data receiver for receiving process data in an automatically controlled installation in which a process data transmitter (14) transmits respective current process data at defined recurring time intervals via a data line (26), wherein the process data transmitter transmits the process data via the data line (26) in the form of a serial transmit data stream (66) which has a plurality of data symbols (68) at a defined symbol rate, comprising an input (24) for receiving the serial transmit data stream, comprising a communication module (22) which extracts the process data from the serial transmit data stream (66), and comprising an output (34), wherein the communication module (22) samples the serial transmit data stream (66) at a sampling rate which is higher than the symbol rate by a defined factor in order to thereby generate a serial receiver data stream (70) with a plurality of sampling values (72) per data symbol (68), wherein the communication module (22) subdivides the serial receiver data stream (70) into data packets (86), each of which has a defined first number of sampling values (72), wherein the communication module (22) selects a defined second number of sampling values (72') from the respective data packets (86), wherein the second number is less than the first number by the defined factor, and wherein the communication module (22) makes the selected sampling values available at the output (34), **characterized in that** the sampling values (72') selected from each data packet (86) are equidistant from one another and each selected sampling value (72') has a right-side and left-side neighbor (92, 94), and wherein the process data receiver (18) compares the selected sampling values (72') with their respective right-side and left-side neighbors (92, 94) in order to determine a plurality of comparison results.

## Revendications

1. Procédé destiné à la transmission de données de processus dans une installation à commande automatique, comprenant les phases suivantes :
- la mise à disposition d'un transmetteur de données de processus (14), lequel transmet respectivement, dans des intervalles de temps récurrents et définis, des données de processus actualisées par l'intermédiaire d'une ligne de données (26) ; et
- la mise à disposition d'un récepteur de données de processus (18), lequel reçoit les données de processus par l'intermédiaire de la ligne de données (26) ;
dans lequel le transmetteur de données de processus (14) émet les données de processus, par l'intermédiaire de la ligne de données (26), sous la forme d'un flux sériel de données d'émission (66), lequel présente une pluralité de symboles de données (68) avec une fréquence de symboles définie ;
dans lequel le récepteur de données de processus (18) réalise un balayage du flux sériel de données d'émission (66) avec une fréquence de balayage, laquelle est supérieure, d'un certain facteur défini, à la fréquence de symboles, en vue de générer de la sorte un flux sériel de données du récepteur (70) avec une pluralité de valeurs de balayage (72) par symbole de données (68) ;
dans lequel le récepteur de données de processus (18) répartit le flux sériel de données du récepteur (70) en des paquets de données (86), lesquels présentent respectivement un premier nombre défini de valeurs de balayage (72) ;
dans lequel le récepteur de données de processus (18) sélectionne un deuxième nombre défini de valeurs de balayage (72') à partir des paquets de données (86) respectifs ;
dans lequel le deuxième nombre est inférieur, d'un certain facteur défini, au premier nombre ; et
dans lequel le récepteur de données de processus traite les valeurs de balayage (72') sélectionnées sous la forme de données de processus reçues ;
**caractérisé en ce que** les valeurs de balayage (72') sélectionnées à partir de chaque paquet de données (86) sont équidistantes les unes par rapport aux autres ; et **caractérisé en ce que** chaque valeur de balayage (72') sélectionnée possède une valeur voisine de droite et une valeur voisine de gauche (92, 94) ; et
dans lequel le récepteur de données de processus (18) compare les valeurs de balayage (72') sélectionnées avec leurs valeurs voisines respectives de droite et de gauche (92, 94) en vue de déterminer une pluralité de résultats de comparaison.

2. Procédé selon la revendication 1, dans lequel le récepteur de données de processus (18) sélectionne le deuxième nombre défini de valeurs de balayage (72'), parallèlement dans le temps, à partir des paquets de données (86) respectifs.

3. Procédé selon la revendication 1 ou 2, dans lequel le récepteur de données de processus forme les paquets de données (86) dans des phases qui se suivent consécutivement dans le temps.

4. Procédé selon la revendication 1, dans lequel le récepteur de données de processus (18) forme les paquets de données (86) en fonction des résultats de comparaison.

5. Procédé selon la revendication 1 ou 4, dans lequel le récepteur de données de processus (18) sélectionne le deuxième nombre de valeurs de balayage (72') en fonction des résultats de comparaison.

6. Procédé selon la revendication 5, dans lequel le récepteur de données de processus sélectionne des premières valeurs de balayage (72') équidistantes à partir d'un premier paquet de données (86) et sélectionne des deuxièmes valeurs de balayage (72") équidistantes à partir d'un deuxième paquet de données (86'), dans lequel les premières valeurs de balayage et les deuxièmes valeurs de balayage (72', 72") sont réparties de manière équidistante les unes par rapport aux autres, quand les premières valeurs de balayage (72') et leurs valeurs voisines (92, 94) respectives de droite et de gauche sont respectivement identiques.

7. Procédé selon la revendication 6, dans lequel les deuxièmes valeurs de balayage (72") sont décalées par rapport aux premières valeurs de balayage (72'), quand tout au moins une première valeur de balayage (72') n'est pas identique à ses valeurs voisines (92, 94) de droite ou de gauche.

8. Procédé selon l'une des revendications 1 à 7, dans lequel le transmetteur de données de processus (14) transmet les données de processus actualisées avec un codage en ligne, lequel est conçu de telle sorte que tout au moins un changement de symbole (96) se produit dans chaque paquet de données (86), en particulier avec un codage en ligne de type 4B5B.

9. Procédé selon l'une des revendications 1 à 8, dans lequel le facteur est tout au moins égal à quatre est, de préférence est exactement égal à quatre, et dans lequel le deuxième nombre est de préférence égal à cinq.

10. Procédé selon l'une des revendications 1 à 9, dans lequel le récepteur de données de processus (18) génère un premier signal d'horloge et un deuxième signal d'horloge (74, 76), lesquels présentent un décalage de phase de 90°, et dans lequel le récepteur de données de processus réalise un balayage du flux de données d'émission avec chaque flanc (78) individuel du premier décalage de phase et du deuxième décalage de phase (74, 76).

11. Procédé selon la revendication 10, dans lequel le premier signal d'horloge et le deuxième signal d'horloge (74, 76) présentent respectivement une fréquence d'horloge qui correspond à la fréquence de symboles définie.

12. Procédé selon l'une des revendications 1 à 11, dans lequel le récepteur de données de processus (18) présente un réseau logique (58) avec une pluralité de chemins de données qui sont parallèles (60) les uns par rapport aux autres, dans lequel les chemins de données (60) parallèles opèrent avec une fréquence d'horloge qui correspond à la fréquence de symboles définie.

13. Procédé selon l'une des revendications 1 à12, dans lequel le récepteur de données de processus (18) modifie les données de processus définies à partie du flux sériel de données d'émission (66) en vue de générer un flux de données d'émission actualisé, et dans lequel le récepteur de données de processus transmet le flux de données d'émission actualisé par l'intermédiaire d'une autre ligne de données (30).

14. Récepteur de données de processus destiné à la réception de données de processus dans une installation à commande automatique, dans lequel un transmetteur de données de processus (14) transmet respectivement, dans des intervalles de temps récurrents et définis, des données de processus actualisées par l'intermédiaire d'une ligne de données (26) ;
dans lequel le transmetteur de données de processus émet les données de processus sous la forme d'un flux sériel de données d'émission (66), lequel présente une pluralité de symboles de données (68) avec une fréquence de symboles définis, par l'intermédiaire de la ligne de données (26), avec une entrée (24) destinée à la réception du flux sériel de données d'émission, avec un module de communication (22), lequel extrait les données de processus à partir du flux sériel de données d'émission (66), et avec une sortie (34) ; dans lequel le module de communication (22) réalise un balayage du flux sériel de données d'émission (66) avec une fréquence de balayage, laquelle est supérieure, d'un certain facteur défini, à la fréquence de symboles, en vue de générer de la sorte un flux sériel de données du récepteur (70) avec une pluralité de valeurs de balayage (72) par symbole de données (68) ;
dans lequel le module de communication (22) répartit le flux sériel de données du récepteur (70) en des paquets de données (86), lesquels présentent respectivement un premier nombre défini de valeurs de balayage (72) ;
dans lequel le module de communication (22) sélectionne un deuxième nombre défini de valeurs de balayage (72') à partir des paquets de données (86) respectifs ;
dans lequel le deuxième nombre est inférieur, d'un certain facteur défini, au premier nombre ; et
dans lequel le module de communication (22) met à disposition les valeurs de balayage sélectionnées au niveau de la sortie (34) ;
**caractérisé en ce que** les valeurs de balayage (72') sélectionnées à partir de chaque paquet de données (86) sont équidistantes les unes par rapport aux autres ; et **caractérisé en ce que** chaque valeur de balayage (72') sélectionnée possède une valeur voisine de droite et une valeur voisine de gauche (92, 94) ; et
dans lequel le récepteur de données de processus (18) compare les valeurs de balayage (72') sélectionnées avec leurs valeurs voisines respectives de droite et de gauche (92, 94), en vue de déterminer une pluralité de résultats de comparaison.
